# EUROPEAN PATENT SPECIFICATION

(11) **EP 0 867 494 B1**
(45) Date of publication and mention of the grant of the patent: **23.11.2005**
(21) Application number: 97121175.0
(22) Date of filing: 02.12.1997
(51) Int. Cl.: B29C 73/16, B29K 7/00, B29K 9/00, B29L 30/00

(54) **Preparation for the sealing of tyres with punctures, apparatus for the sealing and pumping up of tyres and tyres with an integrated sealing preparation**
Zubereitung zum Dichten von Reifenpannen, Vorrichtung zum Dichten und Aufpumpen von Reifen und Reifen mit einer integrierten Dichtungszubereitung
Préparation pour l'obturation de pneus percés, appareillage pour obturer et gonfler des pneus et bandes pneumatiques pourvus d'une composition d'étanchéité

(30) Priority: 17.12.1996 DE 19652546
(43) Date of publication of application: 30.09.1998
(73) Proprietor: Sumitomo Rubber Industries Ltd., Kobe-shi, Hyogo-ken (JP)
(72) Inventor: Gerresheim, Manfred, Dr., 63179 Obertshausen-Hausen (DE); Fuchs, Hans-Bernd, Dr., 63755 Alzenau-Hörstein (DE); Steinbrecht, Ulrich, Dr., 64372 Ober-Ramstadt (DE)
(74) Representative: Finsterwald, Manfred

(56) References cited:
- EP-A- 0 278 297
- EP-A- 0 753 420
- WO-A-94/00289
- WO-A-96/30716
- DE-A- 2 725 673
- FR-A- 671 659
- FR-A- 2 303 678
- GB-A- 2 146 959
- US-A- 2 812 783
- US-A- 3 511 294
- US-A- 3 690 695
- US-A- 3 731 843
- US-A- 3 833 041
- US-A- 3 843 586
- US-A- 3 860 539
- US-A- 3 942 573
- US-A- 4 287 928
- US-A- 5 178 701
- US-A- 5 403 417

## Description

The invention relates to a preparation on the basis of rubber latex for the sealing of tyres with punctures, and to an apparatus for the application of the sealing preparation into the tyre and for the pumping up of the tyre to a pressure at which it can be driven, as well as to tyres with an integrated sealing preparation.

Various sealing preparations for tyre punctures are available on the market. They mainly contain colloidal dispersions of polymers in an aqueous medium, known in the following as latexes. Thus, by way of example, polystyrene-butadiene latexes, polyvinylacetate latexes, acrylic copolymer latexes, nitrile latexes and polychloroprene latexes, are used. Sealing preparations are also known which contain not water but rather tetrachloroethylene as the carrier medium.

For the introduction of the sealing preparation into the tyre and for the pumping up of the tyre to a pressure at which the tyre can be driven, use is made of apparatus comprising a pressure tight container for the sealing preparation which contains a liquefied gas as the pressure source and which is also termed a spray can in the following. Generally, a propane/butane mixture is used as the liquefied gas, in rarer cases also hydrochlorofluorocarbons. These spray cans have at their outlet valve a hose whose other end is provided with a screw adapter for the tyre valve.

When a tyre puncture arises, the sealing preparation is sprayed from the spray can via the tyre valve into the interior of the tyre and the tyre is pumped up by means of the propellant gas to a specific pressure, which is of different levels, depending on the leak. The tyre is then driven for a few kilometres, depending on the nature of the defect, to distribute the sealing preparation in the interior of the tyre and to seal off the defect.

In another apparatus the sealing preparation is located in a compressible flask, which is connected via an adapter to the tyre valve, from which the valve insert was previously removed. The sealing preparation is then injected into the tyre by pressing the flask or bottle. After pulling the valve insert in place, the tyre is inflated again to a specific pressure with the aid of carbon dioxide cartridges.

The above described sealing preparations are not completely satisfactory. They can be relatively easily removed mechanically and are in part not adequately water resistant and do not result in a seal when the tyre defect lies in the run out of the under-tread rubber, i.e. in the region between the tread and the side surface of the tyre.

Difficulties arise with the apparatus for introducing the sealing preparation into the interior of the tyre and for the pumping up of the tyre. Thus, spray cans which contain propane/butane mixtures as the propellant gas only operate satisfactorily, depending on the mixing ratio, at temperatures down to about 0° or somewhat below.

In the older German patent application 195 45 935.0, sealing preparations for tyre punctures and apparatus for the application of the sealing preparation into the tyre are described, which do not have the above named disadvantages. The sealing preparations comprise an agent which contains natural rubber latex, optionally together with further rubber latexes or rubber latex in combination with a compatible adhesive resin. Latexes of synthetic rubbers, such as styrene-butadiene rubber, acrylonitrile-butadiene rubber, ethylene vinylacetate rubber, chloroprene rubber, vinyl pyridine rubber, butyl rubber and also their mixtures, are named as rubber latexes which can be used together with natural rubber latex. The same synthetic rubber latexes and also natural rubber latex are quoted as rubber latexes which can be used in combination with an adhesive resin. Resins which have been added as a tackifier to elastomers, such as terpene phenolic resins, can be used as the adhesive resin.

The same patent application describes an apparatus for the sealing and pumping up of tyres with punctures, in which a pressure-tight container is provided with an outlet valve for the sealing preparation and with a gas inlet. Furthermore, a pressure source is provided, with which gas under pressure can be introduced into the pressure-tight container via the gas inlet in order to introduce the sealing preparation into the interior of the tyre and to pump the tyre up.

Furthermore, a heat source for the heating up of the sealing preparation can be provided in the pressure-tight container and/or in the pressure source. Pressurised bottles with liquid or compressed gas and also air compressors are named as a pressure source.

The object of the present invention is to make available further sealing preparations which result in a better seal under wet conditions and also with defects in the run out of the under-tread rubber and which are also mechanically more difficult to remove. Furthermore, sealing preparations are to be made available in which the year of manufacture can be determined even after it has been applied into the tyre. Moreover, further apparatus should be provided for the application of sealing preparations into the tyre and for the pumping up of the tyre to a pressure at which it can be driven. Finally, tyres with an integrated sealing preparation are proposed.

The object of the invention is a sealing preparation on the basis of natural rubber latex which additionally contains latexes of synthetic isoprene rubber, acrylate rubber and/or methacrylate rubber. The content of natural rubber latex amounts to 10 to 80 % by weight, in particular to 40 to 60 % by weight of the named rubber latex. Preferably preferred are mixtures of natural rubber latex and synthetic isoprene rubber latex or of natural rubber latex and acrylate rubber latex. The sealing preparations on the basis of natural rubber latex can also contain, in addition to synthetic isoprene rubber latex, acrylate rubber latex and/or methacrylate rubber latex one or more of the above named latexes of synthetic rubbers.

Under acrylate rubbers there are to be understood rubber elastomeric vulcanisable copolymers on the basis of acrylic acid esters, in particular ethyl and butyl acrylates and small quantities of comonomers by which reactive groups which favour rapid vulcanisation can be incorporated into the polyacrylate. In the same way methacrylate rubbers are to be understood as rubber elastomeric, vulcanisable copolymers on the basis of methacrylic acid esters, in particular methyl and ethyl methacrylates, and again small quantities of comonomers with reactive groups.

All the above described sealing preparations can preferably additionally contain an adhesive resin compatible with the rubber latexes. Compatible signifies that the adhesive resin causes no coagulation of the rubber latex. Adhesive resins are to be understood to be resins which enhance the bonding capability of the rubber latex to the tyre. For example, resins can be used which have been added as tackifier to elastomers. The adhesive resins are preferably added to the rubber latex in the form of aqueous dispersions or emulsions. As a rule, they are aqueous dispersions. Preferred are terpene phenolic resins. Other preferred adhesive resins are polyvinyl ester, polyvinyl alcohols and polyvinyl pyrrolidones. Preferred polyvinyl esters are resin dispersions based on polyvinyl acetate and polypropionate and copolymeric dispersions of the vinyl acetate with (meth)acrylic esters, vinyl chloride, maleic acid esters, vinyl laurate and ethylene.

In the sealing preparation of the invention, latex which has been deproteinised by centrifugal action or concentrated by evaporation can be used as the natural rubber latex.

Sealing preparations only have a limited durability of a few years. If they are used after the expiry of their useful life, then the danger exists that no adequate seal may any longer be possible. In order to be able to determine in the case of complaints whether sealing preparations were used whose useful life had expired, a further embodiment of the invention provides for the addition of a pigment for the colouring of the sealing preparation. A differently coloured pigment will be added to the sealing preparations for each year of manufacture so that it can be determined with regard to the colour of the applied sealing preparation whether the durability limit was exceeded. A whole series of pigment preparations are available commercially for the colouring of rubber latex. These are preparations of organic or inorganic pigments in an aqueous dispersion medium. By way of example green nitrosonaphthol iron complexes and copper phthalocyanine, blue copper phthalocyanines, iron oxide red, carbon black colouring, pyrazolone orange and diarylide yellow can be considered as pigment types.

The sealing preparations of the invention can be used for the sealing of tyres of bicycles, motorcycles, motorcars, commercial vehicles, industrial vehicles, wheelchairs, caravans, garden vehicles, agricultural vehicles, wheel barrows and so on.

In the sealing preparations of the invention which contain an adhesive resin, the ratio by weight of rubber to adhesive resin lies in a range from about 10:1 to 1:10, preferably 5:1 to 1:3 and particularly preferably from 4:1 to 1:1.

Preferably an antifreeze is added to the sealing preparations of the invention. The customary antifreezes can be used, such as high boiling point, water soluble, non-inflammable organic liquids, such as glycols, preferably ethylene glycol, can be used. Polyethylene glycols with molecular masses of up to 300 to 400 g/mol can also be used. Through this addition a good seal is also achieved at low temperatures, even when these are associated with wet effects.

A dispersion agent, as a rule water, can be used to dilute the sealing preparations. Furthermore, the sealing preparations of the invention can contain customary dispersion media, emulsifiers, foam stabilisers and/or pH regulators, such as ammonia or sodium hydroxide. Furthermore, it can be of advantage for a quick sealing and for the sealing of larger holes to use one or more fillers. As fillers silica, chalks, carbon black, fibrous materials such as natural fibres, chemical fibres of natural polymers or synthetic fibres, glass fibre reinforced plastics, styropor (polystyrene) particles, rubber flour obtained by comminution of vulcanised products, such as tyres, saw dust, particles of moss rubber, particles of foam for arranging cut flowers and the like can, for example, be considered. Particularly preferred are fibrous materials, rubber flour (rubber dust) in combination with silica and glass fibre reinforced plastics.

The fillers can be directly added to the sealing preparation. If the fillers have, however, a size which makes it difficult or impossible to introduce the sealing preparation via the tyre valve without changing the valve size, then these fillers are introduced into the tyre during fitting of the tyre. They then bring about the seal in case of a tyre puncture together with the sealing preparation injected into the tyre.

The solid component of the sealing preparations of the invention can amount to 40 to 70 % by weight, preferably 45 to 55 % by weight and particularly preferably to about 50 % by weight of the sealing preparation.

For the sealing preparation without adhesive resins, the solid component consists essentially of rubber. In the sealing preparation with adhesive rubber the solid component additionally contains the resin in so far as it is a solid resin. Furthermore, the solid component can, if required, include the pigment. The liquid component of the sealing preparation without adhesive resin consists of the carrier agent water for the rubber and optionally of further liquid components such as the antifreeze and the dispersion medium added for dilution, preferably water. For the sealing preparation with the adhesive resin the liquid component also includes the dispersion medium, or emulsifying agent for the adhesive resin, preferably water, provided the adhesive resin is not added in undiluted form and also optionally the liquid adhesive resin.

If fillers are used they are added in a quantity of about 20 to 200 g/l of sealing preparation, preferably 60 to 100 g, to the sealing preparation or are introduced into the tyre during fitting.

The production, storage and filling of the sealing preparation of the invention preferably takes place under nitrogen or noble gases in order to avoid the action of oxygen.

For the sealing preparation of the invention various devices can be used for introducing the sealing preparation into the tyre and for the pumping up of the tyre. Thus, the sealing preparation can be used in the initially named spray cans, which contain propane/butane mixtures as the propellant gas. However, other apparatus can also be used, such as described in the older German patent application 195 45 935.0.

In accordance with the invention an apparatus is proposed for the sealing and pumping up of tyres with punctures comprising a pressure-tight container containing the sealing preparation and having an outlet valve for the sealing preparation and a gas inlet, a pressure source which can be connected to the gas inlet to introduce gas under pressure into the pressure tight container for the introduction of the sealing preparation into the interior of the tyre and for the pumping up of the tyre, with the pressure source being a cartridge containing an airbag inflation charge. As airbag inflation charges use is presently mainly made of solid charges which consist of a mixture of sodium azide, potassium nitrate and silicon dioxide. The triggering of this mixture leads to the generation of nitrogen gas and to the formation of alkali silicates. The liberated nitrogen flows via the gas inlet into the pressure tight container and drives the sealing preparation via the outlet valve and the tyre valve connected to it into the interior of the tyre. At the same time the tyre is pumped up.

The cartridge with the airbag inflation charge can be subdivided into a plurality of chambers, the content of which can be triggered in sequence in order to distribute the gas development over a longer period of time.

A compressed gas charge of air and little hydrogen can also be contained in the cartridge as the airbag inflation charge. Such airbag inflation charges have been proposed recently.

In order to have sealing devices which are capable of operating correctly at low temperatures, a source of heat is provided in a preferred embodiment for the warming up of the sealing preparation in the pressure tight container. A heat cushion with a resistant heating device can be used as the heat source, with the cushion being wound or placed around the pressure tight container. This heat cushion can also be supplied with current via the cigarette lighter.

Furthermore, the heat source can consist of at least two substances separated from one another which, on being mixed, liberate the heat of reaction such as heat of neutralisation, heat of solution or heat of hydration. Thus, calcium chloride can, if required, be added into a cushion containing water which is wound around the pressure tight container to be heated. Through the heat of hydration the sealing preparation is warmed to a temperature at which it is capable of operating. Naturally, other devices can also be used in place of the cushion, for example an upwardly open vessel with a jacket filled with water into which the pressure tight container to be heated is placed when required.

A latent heat store, which, on conversion, liberates heat, can also be used as the heat source. In this case a cushion can also be considered which contains the latent heat store. Substances can be used as the latent heat store, which develop heat on changes of the state of aggregation or on phase changes. Thus, for example, cushions can be used which contain a sodium acetate solution. On pressing a metal plate, which is likewise contained in the cushion, the sodium acetate crystallises and the heat of crystallisation is liberated.

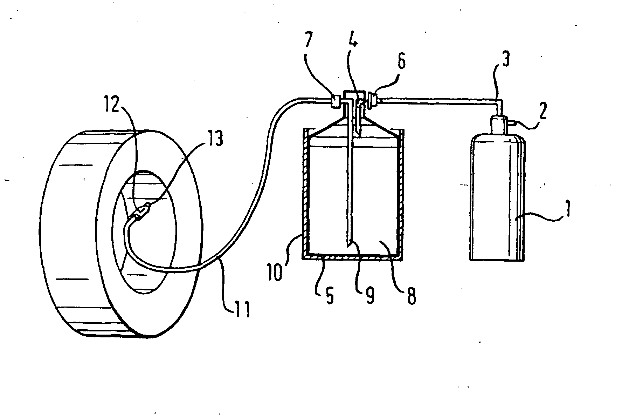

The manner of operation of the apparatus will be explained in more detail with reference to the drawing, which shows a schematic illustration in which the pressure tight container is shown in section.

The cartridge 1 with the airbag inflation charge is provided as the pressure source and has as switch 2 in order to trigger the charge. The cartridge 1 is provided with a gas outlet 3, which is connected to the gas inlet 4 at the pressure tight container 5. The gas inlet 4 can be closed by a shut off valve 6. The outlet valve 7 for the sealing preparation 8 is connected to a riser tube 9. Furthermore, the pressure tight container 5 is standing in a vessel 10, the wall of which is filled with water or can be filled with water, to which - if required - calcium chloride can be added in order to heat up the sealing preparation 8. A hose 11 is connected to the outlet valve 7 and carries at its end a screw adapter 12, with which the hose 11 can be screwed onto the tyre valve 13.

With a tyre puncture the sealing preparation 8 is heated up, if this is necessary at low temperatures by adding calcium chloride into the vessel 10. The screw adapter 12 is screwed onto the tyre valve 13 and the outlet valve 7 for the sealing preparation 8 and also the shut off valve 6 at the gas inlet of the pressure tight container are opened. The gas outlet 3 of the cartridge is connected to the gas inlet 6 of the pressure tight container. The ignition of the airbag inflation charge contained in the cartridge 1 is triggered by the switch 2 at the cartridge 1. The gas developed by the ignition flows via the gas inlet 6 into the pressure tight container 5 and presses the sealing preparation through the riser tube 9, outlet valve 7 and tyre valve 13 into the tyre. Thereafter, the gas developed in the cartridge 1 flows into the interior of the tyre and pumps the tyre up. Thereafter, the screw adapter can be unscrewed.

Naturally, a vessel which can be filled with water can be dispensed of when the sealing preparation does not freeze at low temperatures through the addition of antifreeze.

Furthermore, the invention envisages a tyre with an integrated sealing preparation. The sealing preparation is filled into a plastic hose, for example of polyethylene. This plastic hose is laid during tyre manufacture or tyre installation into the well of the rim around the rim. The plastic hose with the sealing preparation is held in the tyre well by a surrounding holder of plastic or metal in order to avoid imbalance. Furthermore, a tool is provided in the interior of the tyre, for example a lancet knife or needles, in order to open the plastic hose when a tyre puncture arises so that the sealing preparation can distribute within the interior of the tyre. Moreover, a pressure sensor is arranged in the tyre, which, at a specific pressure drop of, for example 0.5 bar, in the tyre triggers an electronic or mechanical pulse which actuates the tool for the opening of the plastic hose for the distribution of the sealing preparation in the tyre. The pressure sensor can, for example, trigger a spring mechanism when a predetermined pressure drop arises in the tyre, with the spring mechanism allowing the tool to open the plastic hose.

If the defect in the tyre does not produce any substantially greater pressure drop than 0.5 bar, prior to the sealing of the tyre, then it can be driven further and brought the correct pressure at the next filling station. With a larger defect, with a correspondingly greater pressure drop, the tyre can be pumped up there and then by a gas cartridge or an air compressor connected to the cigarette lighter.

It is also possible to additionally provide a pressure source in the interior of the tyre, for example a cartridge with liquefied or compressed gas or an airbag inflation charge, which is likewise opened by the electronic or mechanical pulse triggered by the pressure sensor so that the outflowing gas compensates for a part of the pressure loss caused by the puncture.

In a further embodiment the plastic hose arranged in the well of the rim is connected to a pressure source. With a specific pressure drop detected by the pressure sensor, an electronic or mechanical pulse is triggered which opens the pressure source so that the gas under pressure flows into the plastic hose and allows it to burst. The sealing preparation is then distributed within the tyre and seals it. The gas can simultaneously compensate for a part of the pressure drop caused by the puncture.

With a mechanical pressure sensor the pressure source, for example a cartridge filled with liquefied or compressed gas can be opened via a spring mechanism by means of a striker pin. The gases which are preferably to be used are dinitrogen oxide or sulphur hexafluoride. With an electronic pressure sensor the opening of the pressure source is brought about via an electronic circuit, which opens the pressure source, for example by triggering a cartridge with an airbag inflation charge.

## Claims

1. Preparation based on natural rubber latex for the sealing of tyres with punctures, said preparation being introducible via the valve into the tyre, **characterised in that** the preparation additionally contains latexes of synthetic isoprene rubbers, of acrylate rubbers and/or of methacrylate rubbers.

2. Preparation in accordance with claim 1, **characterised in that** the content of natural rubber latex amounts to 40 to 60 % by weight of the total rubber latex.

3. Preparation in accordance with claim 1 or 2, **characterised in that** it contains cis 1.4-isoprene rubber latex as the latex from synthetic isoprene rubbers.

4. Preparation in accordance with one of claims 1 to 3, **characterised in that** the preparation contains an adhesive resin compatible with the rubber latexes.

5. Preparation in accordance with one of claims 1 to 4, **characterised in that** it contains a pigment for the colouring of the rubber latex.

6. Apparatus for the sealing and pumping up of tyres with punctures comprising a pressure-tight container containing a sealing preparation according to one of claim 1 to 5 and having an outlet valve for the sealing preparation and a gas inlet, a pressure source which can be connected to the gas inlet to introduce gas under pressure into the pressure-tight container for the introduction of the sealing preparation into the interior of the tyre and for the pumping up of the tyre, **characterised in that** the pressure source is a cartridge containing an airbag inflation charge.

7. Apparatus in accordance with claim 6, **characterised in that** a heat source is provided for heating up the sealing preparation.

8. Tyre comprising a plastic hose laid in the well of the rim around the rim and filled with a sealing preparation according to one of claims 1 to 5, a tool for the opening of the plastic hose and a pressure sensor which, with a specific pressure drop in the tyre, triggers an electronic or mechanical pulse which actuates the tool to open the plastic hose for the distribution of the sealing preparation in the tyre.

9. Tyre in accordance with claim 8, **characterised in that** it additionally contains a pressure source which is opened by the electronic or mechanical pulse triggered by the pressure sensor for the outflow of gas under pressure.

10. Tyre comprising a plastic hose filled with a sealing preparation according to one of claims 1 to 5 and laid in the rim well around the rim, a pressure source which is connected to the plastic hose and a pressure sensor which, with a specific pressure drop in the tyre, triggers an electronic or mechanical pulse which opens the pressure source for the outflow of gas standing under pressure into the plastic hose and for the rupturing of the plastic hose.

11. Tyre in accordance with claim 9 or claim 10, **characterised in that** the pressure source is a cartridge with liquefied or compressed gas.

## Patentansprüche

1. Mittel zum Abdichten von Reifen bei Pannen auf Basis von Naturkautschuk, wobei das Mittel über ein Ventil in den Reifen einführbar ist, **dadurch gekennzeichnet, dass** das Mittel des weiteren Latices von synthetischen Isopren-Kautschuken, Acrylat-Kautschuken und/oder Methacrylat-Kautschuken enthält.

2. Mittel nach Anspruch 1, **dadurch gekennzeichnet, dass** der Gehalt an Naturkautschuk-Latex 40 bis 60 Gew.-% des gesamten Kautschuk-Latex beträgt.

3. Mittel nach Anspruch 1 oder 2, **dadurch gekennzeichnet, dass** es cis-1,4-Isopren-Kautschuk-Latex als Latex von synthetischen Isopren-Kautschuken enthält.

4. Mittel nach einem der Ansprüche 1 bis 3, **dadurch gekennzeichnet, dass** das Mittel ein mit den Kautschuk-Latices kompatibles Klebstoffharz enthält.

5. Mittel nach einem der Ansprüche 1 bis 4, **dadurch gekennzeichnet, dass** es ein Pigment zur Färbung des Kautschuk-Latex enthält.

6. Vorrichtung zum Abdichten und Aufpumpen von Reifen bei Pannen mit einem druckfesten Behälter, der ein Abdichtmittel nach einem der Ansprüche 1 bis 5 enthält sowie ein Auslassventil für das Abdichtmittel und einen Gaseinlass aufweist, mit einer Druckquelle, welche mit dem Gaseinlass verbunden werden kann zum Einführen von unter Druck stehendem Gas in den druckfesten Behälter, zum Einbringen des Abdichtmittels in das Reifeninnere und zum Aufpumpen des Reifens, **dadurch gekennzeichnet, dass** die Druckquelle eine einen Airbagtreibsatz enthaltende Patrone ist.

7. Vorrichtung nach Anspruch 6, **dadurch gekennzeichnet, dass** eine Wärmequelle zum Erwärmen des Abdichtmittels vorgesehen ist.

8. Reifen mit einem im Felgenbett um die Felge gelegten und mit einem Abdichtmittel nach einem der Ansprüche 1 bis 5 gefüllten Kunststoffschlauch, mit einem Werkzeug zum Öffnen des Kunststoffschlauchs sowie mit einem Drucksensor, welcher bei einem bestimmten Druckabfall in dem Reifen einen elektronischen oder mechanischen Impuls auslöst, welcher das Werkzeug betätigt, um den Kunststoffschlauch zur Verteilung des Abdichtmittels in dem Reifen zu öffnen.

9. Reifen nach Anspruch 8, **dadurch gekennzeichnet, dass** dieser des weiteren eine Druckquelle enthält, welche durch den vom Drucksensor ausgelösten elektronischen oder mechanischen Impuls geöffnet wird zum Ausströmen von unter Druck stehendem Gas.

10. Reifen mit einem Kunststoffschlauch, der mit einem Abdichtmittel nach einem der Ansprüche 1 bis 5 gefüllt ist und im Felgenbett um die Felge gelegt ist, mit einer Druckquelle, welche mit dem Kunststoffschlauch verbunden ist, sowie mit einem Drucksensor, welcher bei einem bestimmten Druckabfall in dem Reifen einen elektronischen oder mechanischen Impuls auslöst, welcher die Druckquelle öffnet zum Ausströmen von unter Druck stehendem Gas in den Kunststoffschlauch und zum Zerreissen des Kunststoffschlauchs.

11. Reifen nach Anspruch 9 oder Anspruch 10, **dadurch gekennzeichnet, dass** die Druckquelle eine Patrone mit verflüssigtem oder komprimiertem Gas ist.

## Revendications

1. Préparation à base de latex de caoutchouc naturel destinée au colmatage de pneumatiques avec des crevaisons, ladite préparation pouvant être introduite via la valve dans le pneumatique, **caractérisée en ce que** la préparation contient de plus des latex de caoutchoucs isoprènes synthétiques, de caoutchoucs acryliques et/ou de caoutchoucs méthacryliques.

2. Préparation selon la revendication 1, **caractérisée en ce que** la teneur en latex de caoutchouc naturel est de 40 à 60 % en poids du latex de caoutchouc total.

3. Préparation selon la revendication 1 ou 2, **caractérisée en ce qu'**elle contient du latex de caoutchouc cis 1,4-isoprène en tant que latex provenant de caoutchoucs isoprènes synthétiques.

4. Préparation selon l'une quelconque des revendications 1 à 3, **caractérisée en ce que** la préparation contient une résine adhésive compatible avec les latex de caoutchouc.

5. Préparation selon l'une quelconque des revendications 1 à 4, **caractérisée en ce qu'**elle contient un pigment pour la coloration du latex de caoutchouc.

6. Appareil destiné au colmatage et au gonflage de pneumatiques avec des crevaisons, comprenant un conteneur étanche à la pression contenant une préparation de colmatage selon l'une quelconque des revendications 1 à 5 et ayant une valve de sortie pour la préparation de colmatage et une entrée de gaz, une source de pression qui peut être raccordée à l'entrée de gaz pour introduire le gaz sous pression dans le conteneur étanche à la pression pour l'introduction de la préparation de colmatage à l'intérieur du pneumatique et pour le gonflage du pneumatique, **caractérisé en ce que** la source de pression est une cartouche contenant une charge de gonflement de coussins de sécurité gonflables.

7. Appareil selon la revendication 6, **caractérisé en ce qu'**une source de chaleur est fournie afin de réchauffer la préparation de colmatage.

8. Pneumatique comprenant un tuyau flexible en plastique déposé dans le puits de la jante autour de la jante et rempli d'une préparation de colmatage selon l'une quelconque des revendications 1 à 5, un outil destiné à l'ouverture du tuyau flexible en plastique et un capteur de pression qui, avec une chute de pression spécifique dans le pneumatique, déclenche une impression électronique ou mécanique qui actionne l'outil pour ouvrir le tuyau flexible en plastique destiné à la distribution de la préparation de colmatage dans le pneumatique.

9. Pneumatique selon la revendication 8, **caractérisé en ce qu'**il comprend de plus une source de pression qui est ouverte par l'impression électronique ou mécanique déclenchée par le capteur de pression pour l'écoulement du gaz sous pression.

10. Pneumatique comprenant un tuyau flexible en plastique rempli avec une préparation de colmatage selon l'une quelconque des revendications 1 à 5 et déposé dans le puits de jante autour de la jante, une source de pression qui est raccordée au tuyau flexible en plastique et un capteur de pression qui, avec une chute de pression spécifique dans le pneumatique, déclenche une impulsion électronique ou mécanique qui ouvre la source de pression destinée à l'écoulement du gaz se trouvant sous pression dans le tuyau flexible en plastique et destinée à rompre le tuyau flexible en plastique.

11. Pneumatique selon la revendication 9 ou 10, **caractérisé en ce que** la source de pression est une cartouche avec un gaz liquéfié ou comprimé.
